# EUROPEAN PATENT SPECIFICATION

(11) **EP 2 032 874 B1**
(45) Date of publication and mention of the grant of the patent: **16.09.2009**
(21) Application number: 07790108.0
(22) Date of filing: 30.05.2007
(51) Int. Cl.: F16H 1/28, F16H 21/36, F16H 57/08

(54) **MATERIALS FOR DEVICE TRANSFORMING RECTILINEAR RECIPROCATING MOTION IN ROTARY MOTION**
MATERIALIEN FÜR EINE VORRICHTUNG, DIE EINE GERADLINIGE HIN- UND HERBEWEGUNG IN EINE DREHBEWEGUNG UMWANDELT
MATÉRIAUX POUR DISPOSITIF DE CONVERSION D'UN MOUVEMENT ALTERNATIF RECTILIGNE EN UN MOUVEMENT DE ROTATION

(30) Priority: 31.05.2006 IT NA20060070
(43) Date of publication of application: 11.03.2009
(73) Proprietor: LA.ME. S.R.L., 81030 Gricignano di Aversa (CE) (IT)
(72) Inventor: DI FOGGIA, Andrea, I-81030 Gricignano Di Aversa (CE) (IT); MIGLIACCIO, Mariano, I-80122 Napoli (IT); PENNACCHIA, Ottavio, 81030 Aversa (IT)
(74) Representative: Fiammenghi-Domenighetti, Delfina
(86) International application number: PCT/IT2007/000376
(87) International publication number: WO 2007/138637

(56) References cited:
- WO-A-01/17401
- WO-A-02/059503
- US-A- 3 626 786
- US-A- 3 791 227
- US-A- 4 617 839

## Description

### Technical Field

The present invention relates to a device which is usable in place of the classical crank mechanism, in order to convert a rectilinear reciprocating motion into a rotational motion, or vice versa according to the preamble of claim 1 and as it is disclosed in WO 02/059503 A. In particular, the device may be applied to internal combustion piston engines, or to compressors, although it is not limited to such applications.

### Background Art

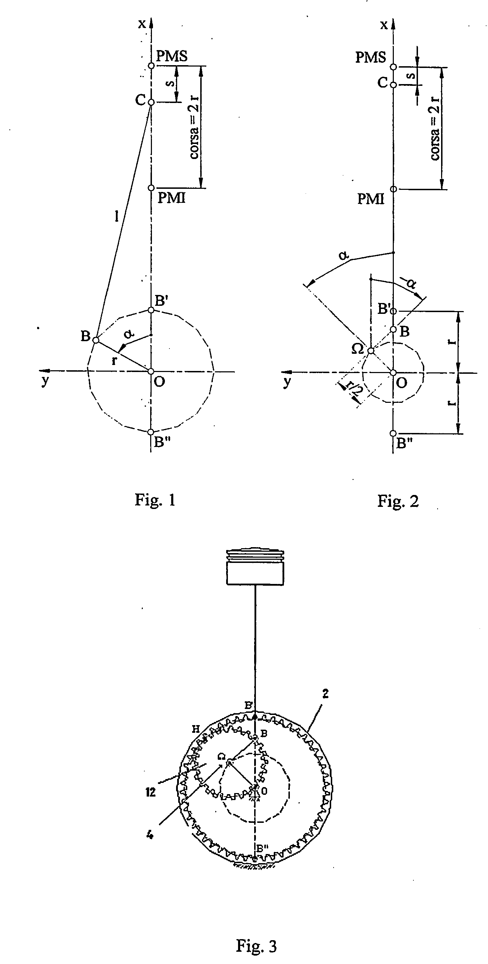

In the classical crank mechanism (Fig. 1) of an internal combustion engine several drawbacks arise. One of them is the amount of frictional force, shortened as "Fia", which adds to the force due to the action of the gases on the seals (piston rings or packing rings), and which acts between the piston side wall and the cylinder wall during the sliding of the piston, because of the reaction to the thrust exerted by the obliquity of the piston rod (connecting rod). It follows that in all kinds of reciprocating piston engines there is a reduction in the mechanical efficiency caused by the energy dissipation produced by this additional force, and specifically in two-cycle engines - in order to insure proper operation - it is therefore necessary to employ a considerable amount of oil in the gasoline (up to 2%) for insuring an adequate sliding, although its combustion is very polluting.

A further disadvantage lies in the overturning action exerted by the piston rod on the piston, and for this reason the latter usually has a sufficient length to limit this action and to reduce the risk of seizure.

However, the larger size determines a higher weight and consequently also higher inertial forces, which contribute in reducing the efficiency. Considerable weight reductions of the components of the mechanism, in combination with a more efficient cooling of the cylinder, could be achieved if it were possible to use a certain piston displacement with small cylinder bores and large strokes. The system formed by a classical crank mechanism has limitations in this respect; actually, since in such a system the connecting rod performs an oscillating motion as well as a translational motion together with the piston, it prevents, for space reasons, to exceed certain limits of stroke value.

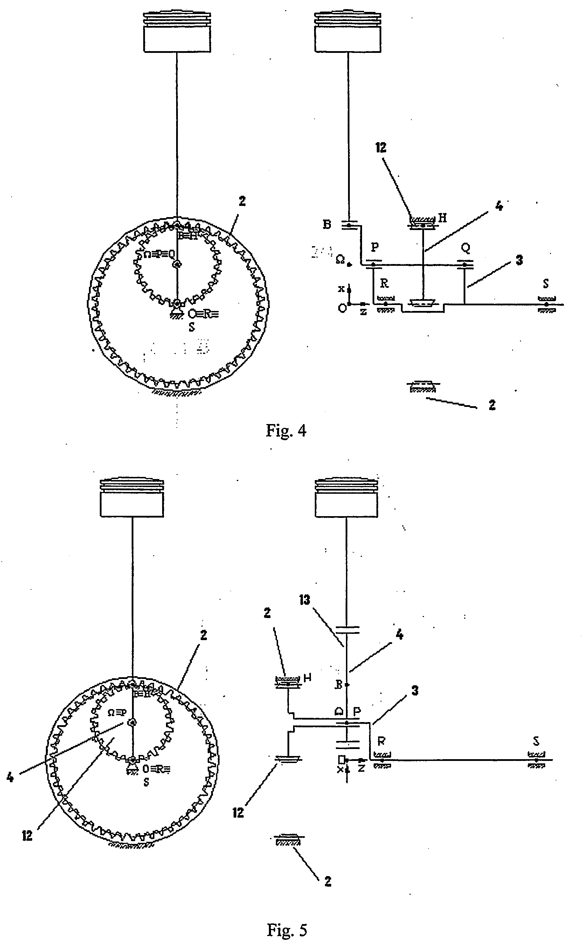

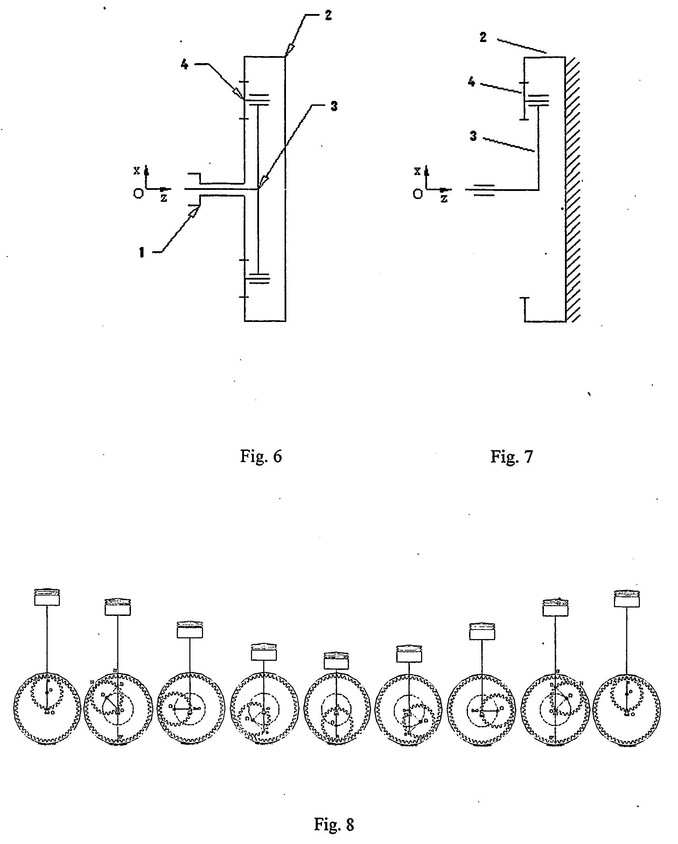

A further limitation of the classical crank mechanism is that the law of motion of the piston is not perfectly sinusoidal but contains harmonics of higher order, and this causes the well known balance difficulties. These harmonics, including the lowest order one, cannot simply be balanced by counterweights; instead, they require the utilisation of counter-rotating shafts. Actually, a principle of the background art that would brilliantly solve the inherent problems of the conventional crank mechanism, is shown in Fig. 2. To illustrate its operation, one can imagine, starting with the classical crank mechanism (Fig. 1), to split the connecting rod (piston rod) OB in two identical parts, thereby obtaining two cranks OΩ and ΩB (FIG. 2). By imposing on the crank OΩ an anticlockwise rotation "α", and on the crank ΩB an identical but opposite rotation " - α ", point B necessarily moves rectilinearly along the cylinder axis. Thus, the angle formed between the connecting rod and the cylinder axis is constantly equal to zero, and consequently, the component of the forces "N", normal to this axis, which are due to the connecting rod obliquity, reduces to zero. On the other hand, since no relative rotation exists between the connecting rod and the piston, there is no need, anymore, to provide a hinged connection at point C as in the classical crank mechanism; in other words, the gudgeon pin can be eliminated and the connecting rod may be integrally formed with the piston. From the point of view of their practical realisation, the motions of the crank OΩ and of the auxiliary crank ΩB may be obtained using a pair of gearwheels, one of which has an inner toothing, centre O, is fixed with respect to the frame of the particular machine being considered in a specific application, and has a pitch diameter 2r, while the second gearwheel has an external toothing with pitch diameter r, it meshes with the first gearwheel, and rotates around the axis passing through Ω which is integral with the crank (Fig. 3). Two possible practical realisations of the schematic drawing of Fig. 3 are respectively shown in Fig. 4 and Fig. 5. This is actually a particular planetary gear train (Fig. 7) in which the central gear (the sun) 1 is absent and the crown wheel 2 is blocked (Fig. 7; compare with Fig. 6). In this gear train, the crank OΩ forms the planet carrier 3 whereas the gearwheel with external toothing forms the planetary gear, or planet 4. From a kinematical viewpoint, the planet carrier 3 only rotates around its own axis, whereas the planetary gear (planet) 4 is characterised by a composite motion, one motion consisting in a rotation around the axis Ω, and the other, in a revolution around the axis O together with the planet carrier 3.

Considering two levorotatory reference frames O_{xyz} and O_{ξηz} in which the first one is an absolute frame "integral" with the crown wheel 2 with internal toothing, and the second one is a relative frame "integral" with the planet carrier, their common axis z being perpendicular to the plane of motion, and imposing a rotation αₜ = α_{z} to the planet carrier (and therefore to the reference frame Ω_{ξηz}) with respect to the reference frame O_{xyz}, it follows that the planet 4 - being obliged to mesh with a gearwheel (crown wheel 2 with internal toothing) with twice its pitch radius - will rotate by an angle α ᵣ = - 2α _{z} with respect to the planet carrier, that is, with respect to the relative reference frame Ω_{ξηz}, therefore, the angle of rotation of the planet 4 with respect to the absolute reference frame O_{xyz} will be αₐ = aᵣ + aₜ = - 2α_{z} + α_{z} = - α_{z}. Fig. 8 shows various positions of the crank mechanism during a variation of crank angle α, that is, of the angle formed by OΩ (see also Fig. 2). Assuming point B to be fixed to ("integral with") the planet, the path (trajectory) of this point during the rotation of the planet carrier, in the absolute frame, will be a rectilinear segment. Point B can be embodied, in practice, by a pin and a bush, wherein the piston may be connected to the planet by a rod, attached to the piston without a hinge and on the other side to the planet through said pin. There are various known techniques which have put into practice the above described kinematical system; however, they offer technical solutions that have some inconsistencies and prevent its correct operation, while in other cases they result in a great structural complexity which discourages its use. The following list includes some filed patent applications based on the above operation principle:
* Patent No. 2,271,766 filed February, 3, 1942 of H.A.HUEBOTTER
* Patent No. 875110 filed April, 30. 1953 of Harald Schultze, Bochum
* Patent No. 3.626.786 filed December 14. 1971 of Haruo Kinoshita et Alii
* Patent No. 3 791 227 filed February, 12. 1974 of Myron E. Cherry
* Patent No. DE 36 04 254 A1 filed February, 11, 1986 of TRAN, Ton Dat
* Patent No. DE 44 31 726 A1 filed September, 6,1994 of Hans Gerhards
* Patent Application No RM2001A000038 filed January 26 2001 (WO 02059503)

### of Di Loggia A.

### Brief Description of Drawings

The present invention will now be described by referring to some of its illustrative and non limitative embodiments, wherein:
FIGURE 1 is a schematic drawing of a simple, traditional crank mechanism;
FIGURE 2 is a schematic drawing of a crank mechanism which underlies the present invention;
FIGURE 3 illustrates the principle of the practical realization of the crank mechanism according to Fig. 2;
FIGURES 4 and 5 are two possible diagrams (schematic drawings) of concrete embodiments of the crank mechanism of Fig. 3;
FIGURE 6 is a planetary gear train including the sun (central gearwheel), planet (planetary gear), the crown wheel, and the planet carrier;
FIGURE 7 serves to compare a crank mechanism on which the present invention is based, to the planetary gear train shown in Fig. 6;
FIGURE 8 shows several positions of the crank mechanism of Fig. 3, for various angles (α) of the crank;
FIGURE 9 shows an embodiment of the planetary gear (planet) made of sintered steel, according to the present invention;
FIGURE 10 relates to an application of the planet of Fig. 9 to a two-cylinder compressor.

### Description of The Invention and of Some Embodiments

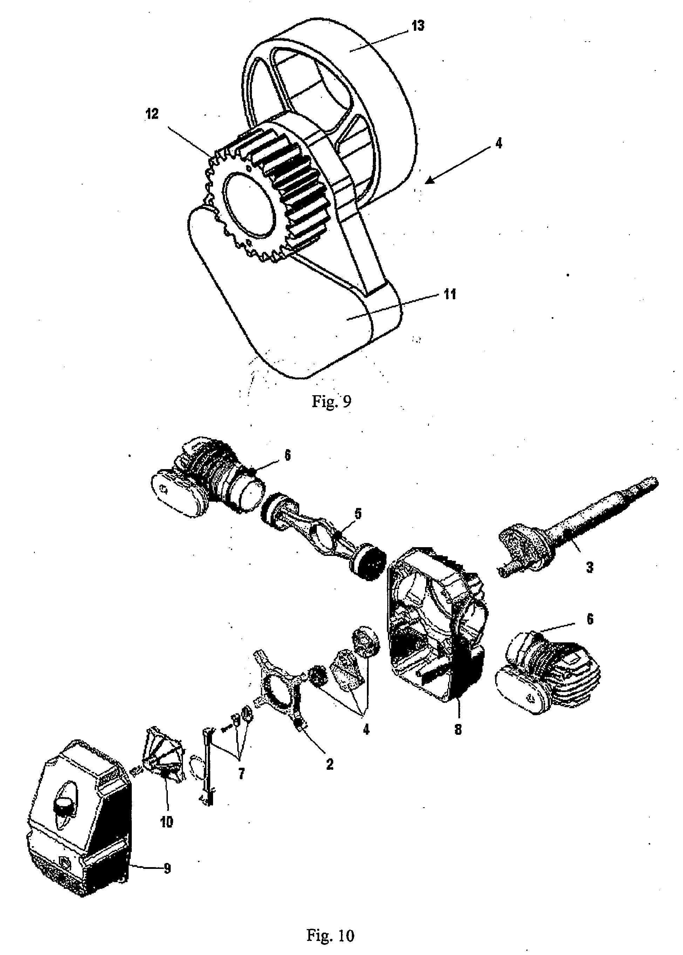

As a matter of fact, none of the previously mentioned inventions has been applied industrially notwithstanding the fact that some of them seem to be valid solutions, this being due to complexity of their manufacture, to space reasons, and to their reliability level, according to which the system is not competitive - in the configurations proposed up to now - as compared with the conventional crank mechanism. According to the present invention it is believed that a practicable solution, for industrial purposes, for the manufacture of mechanisms based on this kind of crank mechanism (which is schematically shown in principle in Fig. 2), and for the application to both engines and compressors, is to use the technology of steel sintering for the production of the planetary gear. Using this technology, it becomes possible to obtain planets in a monolithic configuration, or, better still, formed by several components (Fig. 9), advantageously reducing production costs by virtue of the low costs involved in this technology as compared with others, which allows, by avoiding complicated mechanical machining (tooling), to obtain a finished planetary gear (including the toothed wheels) that complies with design tolerances and is ready for assembling after subjecting its components to possible thermal treatments like carburizing and sinter-hardening; this latter process/technology has been developed in the last years and is performed simultaneously with the sintering process. By producing the planetary gear according to this technology, it becomes possible to overcome the difficulties of structural complexity and the space problems, since the planet realised in this manner can be directly mounted on the rotor of the driving shaft without any interposed bushings, because of the very good tribologic features of sintered material, moreover, this material, by virtue of its texture, composed of micro-granules, has excellent properties of fatigue strength, and breaking/yield strengths near to the corresponding values of compact material.

Fig. 10 shows for illustrative and non-limitative purposes an application concerning a two-cylinder compressor, realised by means of the above described sintered material technology, and which comprises:
- a planet 4 obtained using the sintering technology, formed by three pieces (components);
- a wheel 2 with internal toothing (crown wheel), which is obtained by the sintering technology;
- a planet carrier 3;
- two pistons 5 formed at the two ends of the same piston rod (connecting rod);
- two complete cylinder units 6;
- a pump 7 for the lubricant (oil);
- a housing 8;
- a cover 9;
- an element 10, elastically bound to the cover 9 and having the function of holding (retaining) the elements 2 and 7 of the compressor in place.

## Claims

1. A reciprocating crank mechanism (2, 3, 4) for use in a reciprocating internal combustion engine or a reciprocating compressor, comprising a planet (4), wherein, a point (B) on the pitch line of a pinion (12) of the planet (4) moves according to a reciprocating rectilinear motion during the operation, said crank mechanism further including a stationary crown wheel (2) having an internal toothing, and whose pitch circle has a radius equal to twice the radius of the pitch circle of the pinion (12) of said planet (4) which meshes with the stationary crown wheel (2); **characterised in that** said planet (4) is made of sinter-hardened material, wherein the planet (4), in order to simplify the production process, is formed by separately obtained, and subsequently assembled components (11, 12, 13) of sinter-hardened material.

2. A crank mechanism (2,3,4) according to claim 1, wherein said components (11, 12, 13) made of sinter-hardened material, which are realised separately and assembled afterwards, comprise at least the pinion (12) of the planet (4), a crank pin (13) for the connection with the piston rod (5) of the cylinder or cylinders belonging to the compressor/engine, and a counterweight (11).

3. A crank mechanism (2,3,4) according to anyone of the preceding claims, wherein said sinter-hardened material has self-lubrication properties.

4. A crank mechanism (2,3,4) according to anyone of the preceding claims, wherein its planet (4), notwithstanding its complex geometry, is obtained from a moulding process without any need to perform a complex machining.

## Patentansprüche

1. Ein eine Hin- und Herbewegung ausführender Kurbelmechanismus (2, 3, 4) für eine Verwendung in einem Kolbenverbrennungsmotor oder einem Kolbenkompressor, wobei der Kurbelmechanismus einen Planeten (4) aufweist, wobei, ein Punkt (B) auf der Abwälzbahn eines Ritzels (12) des Planeten (4) sich während des Betriebs entsprechend einer hin- und hergehenden, geradlinigen Bewegung bewegt, wobei der Kurbelmechanismus weiterhin ein stationäres Kronrad (2) umfasst, das eine innere Verzahnung hat und dessen Wälzkreis einen Radius gleich des Doppelten des Radius des Wälzkreises des Ritzels (12) des Planeten (4) hat, das mit dem stationären Kronrad (2) kämmt;
**dadurch gekennzeichnet, dass**
der Planet (4) aus sintergehärtetem Material hergestellt ist, wobei der Planet (4), um den Produktionsprozess zu vereinfachen, aus separat erhaltenen und nachträglich montierten Komponenten (11, 12, 13) aus sintergehärtetem Material ausgebildet ist.

2. Ein Kurbelmechanismus (2, 3, 4) nach Anspruch 1, wobei die Komponenten (11, 12, 13), die aus sintergehärtetem Material bestehen und separat realisiert und nachträglich montiert sind, mindestens das Ritzel (12) des Planeten (4), einen Kurbelzapfen (13) zum Verbinden mit der Kolbenstange (5) des Zylinders oder der Zylinder, die zu dem Kompressor/Motor gehören, und ein Gegengewicht (11) umfassen.

3. Ein Kurbelmechanismus (2, 3, 4) nach einem der vorangehenden Ansprüche, wobei das sintergehärtete Material selbstschmierende Eigenschaften hat.

4. Ein Kurbelmechanismus (2, 3, 4) nach einem der vorangehenden Ansprüche, wobei sein Planet (4) ungeachtet seiner komplexen Geometrie aus einem Formgebungsprozess gewonnen ist, ohne dass es notwendendig ist, eine komplexe Bearbeitung durchzuführen.

## Revendications

1. Mécanisme bielle-manivelle alternatif (2, 3, 4) à utiliser dans un moteur à combustion interne à mouvement alternatif ou dans un compresseur alternatif, comprenant un engrenage planétaire (4), étant précisé qu'un point (B) sur le cercle primitif d'un pignon (12) de l'engrenage planétaire (4) se déplace suivant un mouvement rectiligne alternatif pendant le fonctionnement, ledit mécanisme bielle-manivelle comprenant aussi une roue en couronne fixe (2) qui est pourvue d'une denture intérieure et dont le cercle primitif a un rayon égal à deux fois le rayon du cercle primitif du pignon (12) de l'engrenage planétaire (4) en prise avec la roue en couronne fixe (2) ;
**caractérisé en ce que** ledit engrenage planétaire (4) se compose d'un matériau durci par frittage, l'engrenage planétaire (4), pour simplifier le processus de production, étant formé par des éléments (11, 12, 13) en matériau durci par frittage qui sont obtenus séparément puis assemblés.

2. Mécanisme bielle-manivelle (2, 3, 4) selon la revendication 1, dans lequel les éléments (11, 12, 13) en matériau durci par frittage qui sont réalisés séparément et assemblés ultérieurement comprennent au moins le pignon (12) de l'engrenage planétaire (4), un maneton (13) pour la liaison avec la tige de piston (5) du cylindre ou des cylindres qui font partie du compresseur/moteur, et un contrepoids (11).

3. Mécanisme bielle-manivelle (2, 3, 4) selon l'une quelconque des revendications précédentes, dans lequel le matériau durci par frittage a des propriétés autolubrifiantes.

4. Mécanisme bielle-manivelle (2, 3, 4) selon l'une des revendications précédentes, dans lequel l'engrenage planétaire (4), malgré sa géométrie complexe, est obtenu par moulage sans qu'il y ait besoin de réaliser un usinage complexe.
